# EUROPEAN PATENT SPECIFICATION

(11) **EP 2 088 903 B1**
(45) Date of publication and mention of the grant of the patent: **01.06.2011**
(21) Application number: 07847672.8
(22) Date of filing: 03.12.2007
(51) Int. Cl.: A47J 31/18

(54) **A COFFEE MACHINE**
KAFFEEMASCHINE
MACHINE À CAFÉ

(30) Priority: 04.12.2006 TR 200606860
(43) Date of publication of application: 19.08.2009
(73) Proprietor: Arçelik Anonim Sirketi, 34950 Istanbul (TR)
(72) Inventor: ACIKGOZ, Harun, 34950 Istanbul (TR); TASTAN, Dogan, 34950 Istanbul (TR)
(86) International application number: PCT/EP2007/063161
(87) International publication number: WO 2008/068224

(56) References cited:
- EP-A- 0 290 294
- WO-A-2006/008583

## Description

The present invention relates to a coffee machine.

In the automatic coffee machines that prepare Turkish coffee in accordance with the customary taste, ground coffee, water, sugar and milk of desired amounts are put into the boiling pot wherein the boiling process is made and the boiling process is started by pressing a button after the boiling pot containing the prepared mixture is placed on the heater. Since Turkish coffee has the characteristic of overflowing by quickly foaming during boiling, the foam has to be prevented from overflowing and in order to prepare Turkish coffee in accordance with the traditional taste and consistency, the rising of the foam has to be controlled and the heating process should be terminated just before reaching the boiling point.

In state of the art International Patent Application No W006008583, the level sensor, for example the infrared sensor, is set to detect the initial level of the mixture that is added to the boiling pot and the froth height limit that every mixture at an initial level will reach after the boiling process and which decides to end the boiling process by detecting the change in froth height of the mixture heated in the boiling pot. In the coffee machine described in this patent application, while the initial levels are measured by the level sensor, the ingredients such as water, sugar, coffee, milk in the boiling pot may not mix well whereby resulting in faulty measurement of the initial level. When the mixture is made, the white colored ingredients such as milk and sugar may stay above the mixture in the boiling pot which can result in faulty measurement by the infrared type sensor used as the level sensor. Moreover, the desired quality may not be maintained since the froth rising value, that is, the difference value (#H) is the same for all amounts of mixtures. The adjusted froth rising value (#H) can be high for a small quantity of mixture prepared in the boiling pot, for example for one serving of coffee, thus resulting in excessive boiling of coffee than is desired and the froth to be dispersed. The adjusted froth rising value (#H) can be less for a greater quantity of mixture prepared in the boiling pot, for example for three servings of coffee, thus resulting in insufficient boiling of coffee and the coffee to be uncooked.

The aim of the present invention is the realization of a coffee machine wherein different amounts of coffee can be made in a boiling pot maintaining the same quality.

The coffee machine realized in order to attain the aim of the present invention is explicated in the claims.

In the coffee machine of the present invention, the mixture is prepared before the boiling process by putting in the ingredients such as coffee, water, sugar and milk in the boiling pot according to the number of cups desired to be served by the user and the boiling process is started by selecting the coffee cooking program according to the number of cups intended to be served by the user. As soon as the selected coffee cooking program starts, the control unit implements the coffee cooking program by taking as reference the mixture height measured by the level sensor after waiting for a predetermined mixture settling duration for the selected coffee cooking program.

A certain time period is awaited for measuring of the initial level before employing the processes of measuring the froth rising level during boiling process and ending the boiling at the suitable froth height, and after the ingredients such as coffee and sugar put in the boiling pot by the user settle down in water, the height of the mixture in the pot is measured and this height value is taken as a reference.

In the present invention, different settling down durations are recorded in the memory for each different coffee cooking program according to the number of cups.

In an embodiment of the present invention, a short settling duration for a small amount of mixture, for example for one cup and longer settling durations for greater amounts of mixture prepared for example for two, three or more number of cups are recorded in the memory.

In another embodiment of the present invention, for every selected coffee cooking program, predetermined froth rising levels that are different from each other are recorded in the memory.

In another embodiment of the present invention, the rising levels are recorded in the memory such that a small amount of rising is allowed for ending the boiling of a lesser quantity of mixture and a greater amount of rising is allowed to end the boiling of a greater quantity of mixture.

The coffee machine realized in order to attain the aim of the present invention is illustrated in the attached figures, where:

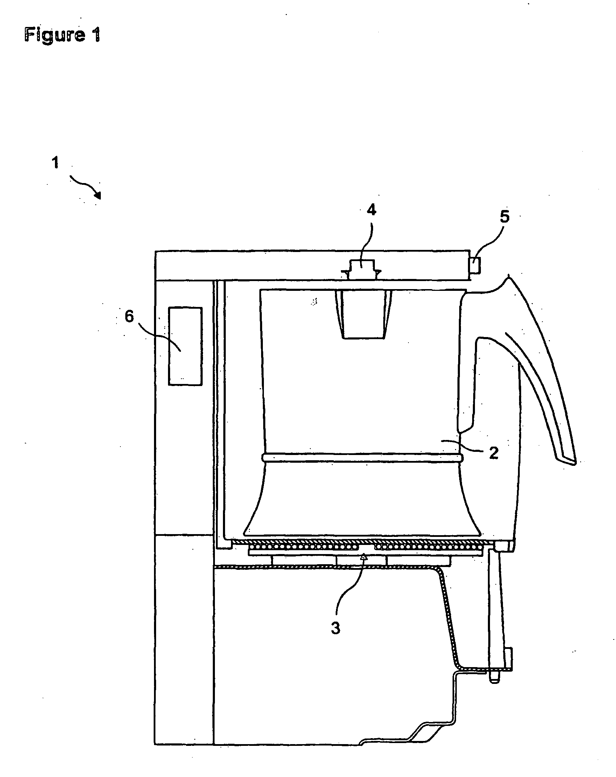

Figure 1 - is the schematic view of a coffee machine.

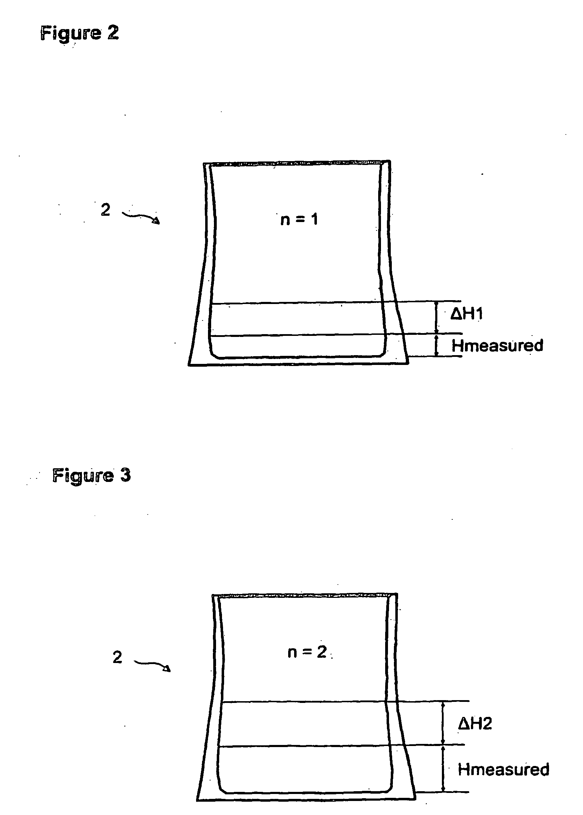

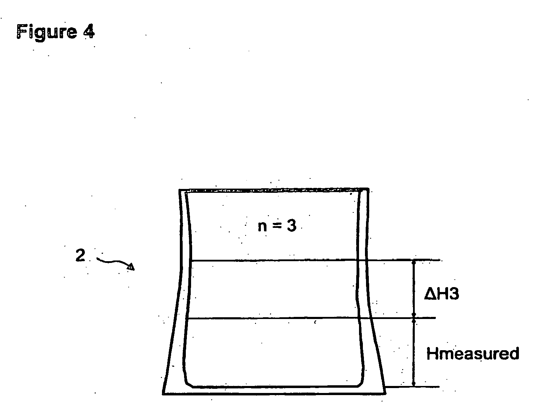

Figures 2, 3, 4 - is the schematic view of the initial and ending levels of the mixture in a boiling pot wherein coffee is made for one, two and three cups.

Elements shown in figures are numbered as follows:

1. Coffee machine

2. Boiling pot

3. Heater

4. Level sensor

5. Start button

6. Control unit

The coffee machine (1) comprises a boiling pot (2) wherein ingredients such as water, coffee, sugar, milk are put to make a liquid mixture and implementing the boiling process of this liquid therein, a heater (3) for heating the boiling pot (2) for a determined period of boiling time, a level sensor (4) of the infrared or ultrasonic type that detects the rising of the froth during boiling, a start button (5) is pressed on for starting the boiling process and a control unit (6) that controls the boiling process according to data received from the level sensor (4).

For preparing coffee in the coffee machine (1) a mixture is made of ingredients such as water, coffee, sugar and milk and put in the boiling pot (2) by the user, then the boiling pot (2) is placed on the heater (3) and the start button (5) is pressed on for starting the boiling process. In the boiling pot (2) one cup of coffee (one serving) or multiple cups of coffee (2, 3, 4... servings) can be prepared as desired by the user.

The number of coffee cups (servings) to be served from the boiling pot (2) after the boiling process is completed will be denoted as: n (n = 1, 2, 3 ...).

In the control unit (6), different coffee cooking programs (Pn) are recorded in the memory (P1, P2, P3, ...) for preparation of coffee for one or more number of cups (n =1, 2, 3, ...) respectively that decides to end boiling by allowing the froth to rise some amount.

In the coffee machine (1), in a coffee cooking program (Pn : P1, P2, P3, ...) the height of the mixture (initial) is measured (Hmeasured) by the level sensor (4) before the start of boiling, this height is accepted as the initial reference and according to this height value (Hmeasured) measured at the start and by measuring the rising of the froth (#H), the boiling process is ended when the level of the mixture reaches the height value of (Hmeasured + #H).

In the coffee machine (1) of the present invention, the control unit (6) starts a coffee cooking program (Pn : P1, P2, P3, ...) according to the number of cups (n = 1, 2, 3, ..) selected by the user and after waiting for a predetermined mixture settling duration (Tsettling) for the selected coffee cooking program (Pn), implements the selected coffee cooking program (Pn) by taking the mixture height (Hmeasured) measured by the level sensor (4) as reference.

Consequently, the initial reference height (Hmeasured) is measured accurately by waiting for the settling of the mixture prepared in the boiling pot (2) by the user containing the ingredients such as water, coffee, sugar and milk. Since generally the white colored ingredients such as sugar, milk being added later on stay on top of the mixture while preparing the mixture, the measurement is made after these white colored ingredients settle down, preventing error in measurement of the mixture height by particularly the infrared type sensor used as the level sensor (4).

In the present invention, different settling durations (Tsettling-n) for each coffee cooking program (P1, P2, P3 ...) are recorded in the memory of the control unit (6).

Since a small amount of mixture prepared in the boiling pot (2), (for example n =1) settles down in a shorter settling duration (Tsettling-1) and a greater amount of mixture (for example n =2, 3, ..) settles down in a longer duration to be suitable for measuring the level, the settling durations (Tsettling-n), are recorded in the memory as Tsettling-1 < Tsettling-2<Tsettling-3 < ....

In an embodiment of the present invention, the different froth rising levels (#Hn) predetermined for each coffee cooking program (P1, P2, P3...) selected by the user are recorded in the memory of the control unit (6). In this embodiment, the boiling process is started according to the number of cups (n), thus the selected coffee cooking program (Pn) at the measured value (Hmeasured) and the control unit (6) implements the different rising values (#Hn) as per the selected program. When the height of the mixture in the boiling pot (2) reaches the value of Hmeasured+ #H, the boiling process is terminated.

For example when the coffee cooking programs P1, P2 or P3 is selected by the user for preparing coffee for one, two or three cups (one, two or three servings), the boiling process is ended at the following mixture height levels:

If program P1 is selected: Hmeasured+ #H1,

If program P2 is selected: Hmeasured+ #H2,

If program P3 is selected: Hmeasured+ #H3.

In another embodiment of the present invention, the rising levels (#Hn) are recorded in the memory as #H1, < #H2 < #H3 < such that a small amount of rising is allowed for ending the boiling of a small quantity of mixture prepared in the boiling pot (2) and a greater amount of rising (swelling) is allowed for ending the boiling of a greater quantity of mixture by the control unit (6). Consequently, a smaller amount of coffee, for example for one person (n=1) is prevented from over boiling by rising more than necessary and the froth to disperse, a greater amount of coffee, for example for two, three... persons (n=2, 3...) is prevented from insufficient boiling and being uncooked, providing every amount of mixture added to the boiling pot (2) to be boiled with the same quality.

In the coffee machine (1) of the present invention, the mixture for each number of cups (n), the height level (Hmeasured) is measured with the correct timing before starting the boiling process, the coffee cooking program (Pn) parameters are implemented and different rising levels (#Hn) are employed respectively for each amount of mixture thus the same quality of coffee is prepared for each mixture amount.

## Claims

1. A coffee machine (1) comprising a boiling pot (2) wherein ingredients such as water, coffee, sugar, milk are put to make a liquid mixture and implementing the boiling process of this liquid therein, a heater (3) for heating the boiling pot (2) for a determined period of boiling time, a level sensor (4) of the infrared or ultrasonic type that detects the rising of the froth during boiling and a control unit (6) that controls the boiling process according to data received from the level sensor (4), the control unit (6) starting a coffee cooking program (Pn : P1, P2, P3, ...) according to the number of cups (n = 1, 2, 3, ..) selected by the user after waiting for a predetermined mixture settling duration (Tsettling) for the selected coffee cooking program (Pn) and implementing the selected coffee cooking program (Pn) by taking the mixture height (Hmeasured) measured by the level sensor (4) as reference, **characterised in that** the control unit (6) has a memory wherein different settling durations (Tsettling-n) respectively for each coffee cooking program (P1, P2, P3...) are recorded.

2. A coffee machine (1) as in Claim 1, **characterized by** the control unit (6) wherein a shorter settling duration (Tsettling-1) for a small amount of mixture (n =1) and longer settling durations (Tsettling-1 < Tsettling-2 < Tsettling-3 < ...) for greater amounts of mixture (n =2, 3, ..) are recorded in the memory thereof.

3. A coffee machine (1) as in any one of the Claims 1 to 2, **characterized by** the control unit (6) wherein predetermined different froth rising levels (ΔHn) respectively for each selected coffee cooking program (P1, P2, P3, ...) are recorded in the memory thereof.

4. A coffee machine (1) as in Claim 3, **characterized by** the control unit (6) wherein the rising levels (ΔHn<, ΔH1, < ΔH2 < ΔH3 <..) are recorded in the memory such that a small amount of rising is allowed for ending the boiling of a smaller quantity of mixture and a greater amount of rising is allowed for ending the boiling of a greater quantity of mixture.

## Patentansprüche

1. Kaffeemaschine (1), umfassend einen Brühbehälter (2), in den Zutaten wie Wasser, Kaffee, Zucker, Milch gegeben werden, um ein flüssiges Gemisch herzustellen, und der den Brühvorgang dieser Flüssigkeit darin implementiert, eine Heizeinrichtung (3) zum Erwärmen des Brühbehälters (2) über eine bestimmte Brühzeit, einen Pegelsensor (4) des Infrarot- oder Ultraschalltyps, der den Anstieg des Schaums beim Brühen erkennt, und eine Steuereinheit (6), die den Brühvorgang anhand von Daten steuert, die sie vom Pegelsensor (4) empfängt, wobei die Steuereinheit (6) ein Kaffeebrühprogramm (Pn: P1, P2, P3...) gemäß der vom Benutzer gewählten Anzahl der Tassen (n = 1, 2, 3...) startet, nachdem sie während einer vorbestimmten Gemischabsetzzeit (Tsettling) des ausgewählten Kaffeebrühprogramms (Pn) gewartet hat, und das ausgewählte Kaffeebrühprogramm (Pn) implementiert, indem sie die Gemischhöhe (Hmeasured), die vom Pegelsensor (4) gemessen wurde, als Referenz nutzt, **gekennzeichnet dadurch, dass** die Steuereinheit (6) einen Speicher aufweist, in dem unterschiedliche Absetzzeiten (Tsettling-n) für die jeweiligen Kaffeebrühprogramme (P1, P2, P3...) gespeichert sind.

2. Kaffeemaschine (1) nach Anspruch 1, **gekennzeichnet durch** die Steuereinheit (6), in deren Speicher eine kürzere Absetzzeit (Tsettling-1) für eine kleine Menge des Gemischs (n = 1) und längere Absetzzeiten (Tsettling-1 < Tsettling-2 < Tsettling-3 <...) für größere Mengen des Gemischs (n = 2, 3...) gespeichert sind.

3. Kaffeemaschine (1) nach einem der Ansprüche 1 und 2, **gekennzeichnet durch** die Steuereinheit (6), in deren Speicher vorbestimmte unterschiedliche Schaumanstiegspegel (ΔHn) für das jeweilige Kaffeebrühprogramme (P1, P2, P3...) gespeichert sind.

4. Kaffeemaschine (1) nach Anspruch 3, **gekennzeichnet durch** die Steuereinheit (6), in deren Speicher ansteigende Pegel (ΔHn < ΔH 1 < ΔH2 ΔH3 <...) gespeichert sind, derart, dass eine kleine Anstiegsmenge zulässig ist, um das Brühen einer kleineren Menge des Gemischs zu beenden, und eine größere Anstiegsmenge zulässig ist, um das Brühen einer größeren Menge des Gemischs zu beenden.

## Revendications

1. Une machine à café (1) comprenant un pot d'ébullition (2) dans lequel les ingrédients tel que l'eau, le café, le sucre, le lait sont mis à faire un mélange liquide et met en oeuvre le processus d'ébullition de ce liquide y contenu, un appareil de chauffage (3) pour le chauffage du pot d'ébullition (2) pendant une période déterminée de temps d'ébullition, un capteur de niveau (4) de type infrarouge ou ultrasonique qui détecte la montée de la mousse pendant l'ébullition et une unité de contrôle (6) qui contrôle le processus d'ébullition selon les données reçues du capteur de niveau (4), l'unité de contrôle (6) démarrant un programme de cuisson de café (Pn : P1, P2, P3, ...) selon le nombre de tasse (n = 1, 2, 3, ..) sélectionné par l'utilisateur après avoir attendu pendant une durée prédéterminée de tassement de mélange (Tsettling) pour le programme de cuisson de café sélectionné (Pn) et met en oeuvre le programme de cuisson de café sélectionné (Pn) en prenant comme référence la hauteur du mélange (Hmeasured) mesurée par le capteur de niveau (4), **caractérisée en ce que** l'unité de contrôle (6) a une mémoire dans laquelle des différentes durées de tassement (Tsettling-n) pour chaque programme de cuisson de café (P1, P2, P3...) sont respectivement enregistrées.

2. Une machine à café (1) selon la Revendication 1, **caractérisée par** l'unité de contrôle (6) où une durée plus courte de tassement (Tsettling-1) pour une petite quantité de mélange (n=1) et des durées plus longues de tassement (Tsettling-1 < Tsettling-2 < Tsettling-3 < ...) pour des quantités plus grandes de tassement (n =2, 3, ..) sont enregistrées dans la mémoire de celle-ci.

3. Une machine à café (1) selon l'une quelconque des revendications 1 ou 2, **caractérisée par** l'unité de contrôle (6) où des différents niveaux prédéterminés de montée de mousse (ΔHn) pour chaque programme de cuisson de café sélectionné (P1, P2, P3, ...) sont enregistrés dans la mémoire de celle-ci.

4. Une machine à café (1) selon la Revendication 3, **caractérisée par** l'unité de contrôle (6) où les niveaux de montée (ΔHn<, ΔH1, < ΔH2 < ΔH3 <..) sont enregistrés dans la mémoire de telle sorte que une petite quantité de hausse est permis pour mettre fin à l'ébullition d'une quantité plus petite de mélange et une quantité plus grande de montée est permis pour mettre fin à l'ébullition d'une quantité plus grande de mélange.
